# EUROPÄISCHE PATENTSCHRIFT

(11) **EP 2 394 043 B1**
(45) Veröffentlichungstag und Bekanntmachung des Hinweises auf die Patenterteilung: **31.08.2016**
(21) Anmeldenummer: 10701477.1
(22) Anmeldetag: 26.01.2010
(51) Int. Cl.: F02D 41/02, F02D 41/06, F02D 41/40

(54) **VERFAHREN ZUM BETREIBEN EINER BRENNKRAFTMASCHINE MIT EINER ABGASREINIGUNGSANLAGE**
METHOD FOR THE OPERATION OF AN INTERNAL COMBUSTION ENGINE COMPRISING AN EMISSION CONTROL SYSTEM
PROCEDE POUR FAIRE FONCTIONNER UN MOTEUR A COMBUSTION INTERNE EQUIPE D'UN SYSTEME DE DEPOLLUTION DES GAZ D'ECHAPPEMENT

(30) Priorität: 06.02.2009 DE 102009007764
(43) Veröffentlichungstag der Anmeldung: 14.12.2011
(73) Patentinhaber: Daimler AG, 70327 Stuttgart (DE)
(72) Erfinder: KOCH, Thomas, 71034 Böblingen (DE); MASSNER, Alexander, 73730 Esslingen (DE); TRAEBERT, Anke, 70469 Stuttgart (DE)
(74) Vertreter: JENSEN & SON
(86) Internationale Anmeldenummer: PCT/EP2010/000428
(87) Internationale Veröffentlichungsnummer: WO 2010/089038

(56) Entgegenhaltungen:
- EP-A1- 1 400 664
- EP-A1- 1 471 219
- EP-A1- 2 009 268
- FR-A1- 2 812 687
- JP-A- 2003 155 913

## Beschreibung

Die Erfindung betrifft ein Verfahren zum Betreiben einer Brennkraftmaschine mit einer Abgasreinigungsanlage mit wenigstens einer katalytischen und/oder filterwirksamen Abgasreinigungskomponente nach dem Oberbegriff des Anspruchs 1.

Bei Brennkraftmaschinen mit einer Abgasreinigungsanlage mit einer katalytischen und/oder filterwirksamen Abgasreinigungskomponente besteht allgemein das Bedürfnis, dass diese möglichst rasch ihre Betriebstemperatur erreicht. Beispielsweise wird in der DE 197 49 400 A1 vorgeschlagen, einen Wirkungsgrad für einen SCR-Katalysator zu bestimmen und für den Fall, dass dieser bei einem Warmlauf der Brennkraftmaschine einen vorbestimmten Wert unterschreitet, bestimmte Brennkraftmaschinenbetriebsgrößen so zu verändern, dass die Abgastemperatur erhöht wird. Allerdings kann insbesondere in Verbindung mit einem Kaltstart bzw. Warmlauf der Brennkraftmaschine eine Aufheizung der Abgasreinigungsanlage eine unerwünschte Rauchemission, insbesondere eine Weißrauchemission zur Folge haben. In der EP1400664 A1 wird ein Verfahren zur Abschätzung einer HC-Speichermenge und davon abhängiger Erhöhung der Abgastemperatur vorgeschlagen.

Aufgabe der Erfindung ist es, ein Verfahren zum Betreiben einer Brennkraftmaschine mit einer Abgasreinigungsanlage mit einer katalytisch und/oder filterwirksamen Abgasreinigungskomponente anzugeben, bei welchem eine Abgabe von Rauch, insbesondere von Weißrauch an die Umgebung insbesondere in Verbindung mit einem Kaltstart bzw. einem Warmlauf der Brennkraftmaschine zuverlässig auf tolerierbar niedrige Werte begrenzt ist.

Diese Aufgabe wird mit einem Verfahren mit den Merkmalen des Anspruchs 1 gelöst.

Bei dem erfindungsgemäßen Verfahren zum Betreiben einer Brennkraftmaschine mit einer Abgasreinigungsanlage mit wenigstens einer katalytischen und/oder filterwirksamen Abgasreinigungskomponente erfolgt eine Abschätzung einer HC-Speichermenge von in einer oder mehreren der wenigstens einen Abgasreinigungskomponente gespeicherten Kohlenwasserstoffen (HC) und ein Kaltstartmotorbetriebsverfahren mit vorgebbaren Werten für vorgebbare Brennkraftmaschinenbetriebsgrößen wird aktiviert, wenn die Abschätzung ergibt, dass die HC-Speichermenge einen vorgebbaren HC-Speichermengengrenzwert überschreitet. Unter HC werden hier wie üblich summarisch Kohlenwasserstoffe verstanden, wobei eine Mengen- oder Konzentrationsermittlung zur besseren Vergleichbarkeit auf eine bestimmte Kohlenwasserstoffverbindung, wie beispielsweise Methan oder Hexan normiert sein kann. Als Abgasreinigungskomponenten im Sinne der Erfindung sind Abgaskatalysatoren wie Oxidationskatalysatoren, Stickoxid-Speicherkatalysatoren, SCR-Katalysatoren oder katalytisch beschichtete oder unbeschichtete Partikelfilter zu verstehen.

Das für den Fall einer den HC-Speichermengengrenzwert überschreitenden HC-Speichermenge vorgesehene spezifische Kaltstartmotorbetriebsverfahren findet bevorzugt keine Anwendung oder allenfalls eine Anwendung in abgewandelter Form, wenn, bzw. solange der HC-Speichermengengrenzwert unterschritten ist. Dadurch kann ein Kraftstoffmehrverbrauch vermieden werden, der sich typischerweise bei dem vorgesehenen spezifischen Kaltstartmotorbetriebsverfahren einstellt, wenn dieses aus Sicht der unerwünschten Rauch- bzw. Weißrauch-Emission nicht erforderlich ist.

Die Erfinder haben erkannt, dass eine unerwünscht hohe Rauch- bzw. Weißrauch-Emission in erster Linie von einer zu großen Menge von in einer oder mehreren Abgasreinigungskomponenten der Abgasreinigungsanlage eingespeicherten, d.h. adsorbierten und/oder absorbierten HC verursacht ist. Es wurde überraschend festgestellt, dass diesbezüglich Abgasreinigungskomponenten mit zeolithischer Beschichtung als besonders kritisch anzusehen sehen sind. Weist die Abgasreinigungsanlage neben einem zeolithischen SCR-Katalysator einen Oxidationskatalysator und/oder einen Partikelfilter mit zeolithischer Beschichtung auf, so weist typischerweise der SCR-Katalysator die höhere HC-Speicherkapazität auf. Gleichwohl kann eine Rauchemission infolge Desorption von zuvor gespeicherten HC von Oxidationskatalysator und/oder Partikelfilter dominiert sein.

Durch die erfindungsgemäß vorgenommene Abschätzung der HC-Speichermenge kann das Risiko einer HC-Desorption bzw. Rauchemission infolge einer Aufheizung einer Abgasreinigungskomponente mit HC-Speicherfähigkeit, insbesondere eines entsprechend ausgeführten SCR-Katalysators, Oxidationskatalysators und/oder Partikelfilters in Verbindung mit einem Kaltstart bzw. einem Warmlauf der Brennkraftmaschine ebenfalls abgeschätzt werden. Übersteigt die HC-Speichermenge in der Abgasreinigungsanlage insgesamt oder in einer in Bezug auf eine Rauchemission dominanten Abgasreinigungskomponente den kritischen HC-Speichermengengrenzwert, so wird das erfindungsgemäße Kaltstartmotorbetriebsverfahren aktiviert. Damit erfolgt eine Aufheizung der Abgasreinigungsanlage oder einer in Bezug auf eine HC-Adsorption dominanten Abgasreinigungskomponente einerseits so frühzeitig, dass die Rauch-Emission auf vorgebbare Werte begrenzt bleibt. Andererseits erlaubt das erfindungsgemäße Kaltstartmotorbetriebsverfahren eine Aufheizgeschwindigkeit der Abgasreinigungsanlage oder in einer in Bezug auf eine HC-Adsorption dominanten Abgasreinigungskomponente gezielt so einzustellen, dass die Rauch-Emission auf vorgebbare Werte begrenzt bleibt.

In Ausgestaltung der Erfindung werden bei aktiviertem Kaltstartmotorbetriebsverfahren Werte von Brennkraftmaschinenbetriebsgrößen derart vorgegeben, dass die wenigstens eine Abgasreinigungskomponente durch von der Brennkraftmaschine abgegebene Abgase so aufgeheizt wird, dass ein vorgebbarer Desorptionsratenwert für eine sich infolge der Aufheizung ergebende Rate von aus der wenigstens einen Abgasreinigungskomponente desorbierenden HC oder eine vorgebbare Maximalkonzentration von HC in dem an die Umgebung abgegebenen Abgas unterschritten wird. Es wurde festgestellt, dass eine rasche Aufheizung einer mit eingespeicherten HC beladenen Abgasreinigungskomponente eine sehr rasch zunehmenden Desorption von HC, d.h. eine hohe HC-Desorptionsrate und damit eine starke Rauch-Emission zur Folge haben kann. Dies ist insbesondere dann der Fall, wenn bei der Aufheizung ein Desorptions-Temperaturbereich von typischerweise +50 °C bis +250 °C erreicht bzw. durchschritten wird. Je nach Größe der HC-Speichermenge resultiert daraus eine mehr oder weniger hohe Maximalkonzentration von an die Umgebung abgegebenem HC im Abgas. Es wird daher bei einer Aufheizung der Abgasreinigungsanlage ein vorgebbarer Aufheizgradientenmaximalwert für einen Aufheizgradienten einer in Bezug auf eine rauchverursachende HC-Desorption dominanten Abgasreinigungskomponente unterschritten Durch in Abhängigkeit von HC-Speichermenge und/oder Temperatur insbesondere der in Bezug auf eine rauchverursachende HC-Desorption dominanten Abgasreinigungskomponente eingestellte Werte von Brennkraftmaschinenbetriebsgrößen können der Aufheizgradient und damit der Desorptionsratenwert bzw. die HC-Maximalkonzentration gezielt beeinflusst und vorgegebene oder vorgebbare Grenzwerte zuverlässig unterschritten werden. Beispielsweise kann durch entsprechend eingestellte Werte von Brennkraftmaschinenbetriebsgrößen eine vergleichsweise langsame Aufheizung von weniger als ca. 10 °C je min, insbesondere in einem Temperaturintervall von - 30 °C bis + 230 °C, eine sanfte HC-Desorption erzielt werden, bei welcher eine kritische Rauch-Emissionsspitze vermieden wird. Die Einstellung eines niedrigen Aufheizgradienten ist insbesondere dann vorteilhaft, wenn eine in Bezug auf eine rauchverursachende HC-Einspeicherung dominante Abgasreinigungskomponente, wie z.B. ein zeolithischer Oxidationskatalysator, eine Temperatur wenig unterhalb oder innerhalb des Desorptions-Temperaturbereichs aufweist. Besonders vorteilhaft ist es, ausgehend von tiefen Temperaturen der Abgasreinigungskomponente, d.h. weniger als 0 °C, insbesondere weniger als minus 20 °C, in einem ersten Aufheizschritt zunächst einen hohen Aufheizgradienten von etwa 20 °C/min oder mehr einzustellen. Dadurch wird die Expositionsdauer der Abgasreinigungskomponente in dem für eine HC-Einspeicherung kritischen Temperaturregime verkürzt, eine weitere HC-Einspeicherung weitgehend vermieden und somit die HC-Speichermenge begrenzt. Ist eine knapp unterhalb des Desorptions-Temperaturbereichs, d.h. eine um etwa 10 °C darunter liegenden Temperatur erreicht, wird ein niedriger, unterhalb des Aufheizgradientenmaximalwerts liegender Aufheizgradient eingestellt. Dabei ist es vorteilhaft, den Aufheizgradienten temperaturabhängig, insbesondere mit steigender Temperatur abnehmend einzustellen.

In weiterer Ausgestaltung der Erfindung beruht die Abschätzung der HC-Speichermenge auf einer Betriebsdauer der Brennkraftmaschine mit einer ständig eine vorgebbare insbesondere erste Schwellentemperatur unterschreitenden Temperatur für wenigstens eine in Bezug auf eine rauchverursachende HC-Desorption dominante Abgasreinigungskomponente. Als kritisch haben sich speziell längere Schwachlastbetriebszeiten bei niedrigen Temperaturen erwiesen. Wird beispielsweise unterhalb einer materialspezifischen Schwellentemperatur von typischerweise ca. 30 °C die Brennkraftmaschine längere Zeit im Leerlauf betrieben, so reichern sich emittierte HC in einer jeweiligen zur HC-Adsorption befähigten Abgasreinigungskomponente zunehmend an. Bei mehrfachen, aufeinander folgenden Kaltstart- und/oder Warmlaufvorgängen, bei denen insbesondere diese Abgasreinigungskomponente ständig Temperaturen aufweist, bei denen eine Einspeicherung von HC erfolgen kann, kumulieren sich die jeweils eingespeicherten HC-Mengen. Bei einer nachfolgenden, insbesondere raschen Aufheizung infolge einer ansteigenden Brennkraftmaschinenlast kann es daher zu einer unerwünscht starken HC-Desorption und Rauch-Emission kommen. Erfindungsgemäß wird dem dadurch begegnet, dass die HC-Speichermenge über die Betriebszeit mit HC-Einspeicherung zumindest für die für eine rauchverursachende HC-Desorption dominante Abgasreinigungskomponente integrierend abgeschätzt wird. Sofern mehrere Abgasreinigungskomponenten mit einer HC-Speicherfähigkeit vorhanden sind, wird bevorzugt die insgesamt in der Abgasreinigungsanlage eingespeicherte HC-Menge abschätzend ermittelt. Falls nur eine, in Bezug auf eine HC-Speicherung dominierende Abgasreinigungskomponente vorhanden ist, so kann es ausreichen, wenn die HC-Speichermenge nur bei dieser Komponente ermittelt wird. Infolge der erfindungsgemäß vorgesehenen Abschätzung der HC-Speichermenge kann bereits vor Erreichen einer kritischen integralen HC-Speichermenge das Kaltstartmotorbetriebsverfahren aktiviert und eine gezielte Aufheizung der Abgasreinigungsanlage initiiert werden. Zur Abschätzung der HC-Speichermenge wird bevorzugt auf abgespeicherte Emissionskennfelder der Brennkraftmaschine und entsprechende Adsorptionskennlinien zurückgegriffen. Es kann auch eine online-Berechnung, basierend auf einem Adsorptions- und Desorptionsmodell für den oder die maßgeblichen Abgasreinigungskomponenten vorgesehen sein.

In weiterer Ausgestaltung der Erfindung wird als HC-Speichermengengrenzwert ein Bruchteil einer HC-Speicherkapazität der wenigstens einen Abgasreinigungskomponente oder einer in Bezug auf eine rauchverursachende HC-Desorption dominanten Abgasreinigungskomponente vorgegeben. Die HC-Speicherkapazität als maximal speicherbare HC-Menge ist typischerweise stark von der Temperatur einer jeweiligen Abgasreinigungskomponente und außerdem von deren Art und/oder Alterungszustand abhängig. Die HC-Speicherkapazität wird zweckmäßig vorab empirisch für alle für eine HC-Adsorption relevanten Abgasreinigungskomponenten ermittelt und in einem Steuergerät abgespeichert. Dabei kann neben einer Temperaturabhängigkeit eine Alterungsabhängigkeit berücksichtigt werden. Für einen vorzugsweise vorgesehenen SCR-Katalysator vom Eisen- oder Kupfer-Zeolithtyp liegt die HC-Speicherkapazität typischerweise im Bereich von 1 g bis 30 g je I Katalysatorvolumen bei niedrigen Temperaturen von 0 °C und weniger. Durch die erfindungsgemäß vorgesehene Orientierung des HC-Speichermengengrenzwerts an der solcherart bestimmten HC-Speicherkapazität wird eine unerwünscht hohe Beladung des SCR-Katalysators oder einer anderen diesbezüglich relevanten Abgasreinigungskomponente vermieden. Dabei ist es besonders vorteilhaft, wenn der Bruchteil der HC-Speicherkapazität temperaturabhängig, insbesondere abnehmend mit abnehmender Temperatur der entsprechenden Abgasreinigungskomponente(n) vorgegeben wird.

In weiterer Ausgestaltung der Erfindung wird nach Erreichen einer vorgebbaren insbesondere zweiten Schwellentemperatur für wenigstens eine der Abgasreinigungskomponenten oder einer in Bezug auf eine rauchverursachende HC-Desorption dominanten Abgasreinigungskomponente das Kaltstartmotorbetriebsverfahren deaktiviert. Die Erfinder haben erkannt, dass oberhalb einer typischerweise katalysatorspezifischen Schwellentemperatur eine Einspeicherung von HC in zeolithhaltigen Abgasreinigungskomponenten gering oder sogar vernachlässigbar ist, wobei gegebenenfalls eingespeicherte HC bereits unterhalb dieser Temperatur wenigstens annähernd vollständig desorbieren können. Wird das Kaltstartmotorbetriebsverfahren möglichst rasch nach Erreichen der Schwellentemperatur deaktiviert, so wird damit auch ein Kraftstoffmehrverbrauch vermieden oder zumindest begrenzt. Überschreitet die vom Benutzer angeforderte Motorlast einen vorgebbaren Mindestwert, bei welchem sichergestellt ist, dass eine weitere Erwärmung oder zumindest keine Abkühlung erfolgt, so wird bevorzugt unmittelbar nach Erreichen der Schwellentemperatur das Kaltstartmotorbetriebsverfahren deaktiviert. Im anderen Fall kann vorgesehen sein, dieses noch eine gewisse Zeit aktiviert zu lassen. Vorteilhaft ist es in diesem Zusammenhang insbesondere, den genauen Zeitpunkt des Deaktivierens in Abhängigkeit von der Motorlast zu applizieren. Selbstverständlich kann auch vorgesehen sein, eine HC-Desorption sensorisch zu erfassen und nach Überschreiten eines detektierten HC-Desorptionsmaximums das aktivierte Kaltstartmotorbetriebsverfahren durch Beenden einiger oder aller dabei ergriffenen Maßnahmen zu deaktivieren.

In weiterer Ausgestaltung der Erfindung wird bei aktiviertem Kaltstartmotorbetriebsverfahren eine Mehrfacheinspritzung von Kraftstoff in einen oder mehrere Zylinderbrennräume der Brennkraftmaschine vorgenommen, welche innerhalb eines Arbeitsspiels des jeweiligen Zylinders eine erste Piloteinspritzung, eine auf die erste Piloteinspritzung folgende zweite Piloteinspritzung und eine auf die zweite Piloteinspritzung folgende Haupteinspritzung umfasst. Dabei kann vorgesehen sein die erste und/oder die zweite Piloteinspritzung in zwei kurz aufeinander folgende Einzeleinspritzungen aufzuteilen. Durch die vorgenommenen wenigstens zwei der Haupteinspritzung vorangehenden Piloteinspritzungen ist eine Entflammung des eingespritzten Kraftstoffs auch bei niedrigen Motortemperaturen unterhalb des Gefrierpunkts ermöglicht. Bevorzugt wird eine vergleichsweise geringe Kraftstoffmenge von etwa 20 % oder weniger in Bezug auf die Haupteinspritzmenge in der ersten bzw. in der zweiten Piloteinspritzung eingespritzt. Auf diese Weise ist eine Zündung auch bei sehr niedrigen Umgebungs- bzw. Motortemperaturen von minus 20 °C oder weniger ermöglicht. Aufgrund der geringen Piloteinspritzmenge ist eine verdampfungsbedingte Temperaturabsenkung zumindest verringert und eine Entflammung der homogenisierten Piloteinspritzmenge ist verbessert.

Es ist besonders bevorzugt, wenn in weiterer Ausgestaltung der Erfindung die erste Piloteinspritzung in einem Kurbelwellenwinkelbereich von größer als 20 Grad vor einem oberen Totpunkt im Kompressionstakt des jeweiligen Zylinders erfolgt. Typischerweise ist bei niedrigen Temperaturen von minus 20 °C oder weniger die Temperatur im Zylinder für eine konventionelle Diffusionsverbrennung zu niedrig. Bei der erfindungsgemäßen frühen Piloteinspritzung ist eine Homogenisierung des Gemisches ermöglicht, wodurch die Zündbarkeit verbessert wird. Mit entsprechendem Zündverzug erfolgt ein Verbrennungsumsatz der ersten Piloteinspritzung, was zu einem Anstieg des Temperaturniveaus im Zylinder führt. Die mit der zweiten Piloteinspritzung eingebrachte Kraftstoffmenge kann daher rasch verdampfen und ebenfalls entflammen.

In weiterer Ausgestaltung der Erfindung erfolgt die zweite Piloteinspritzung zu einem Zeitpunkt nach dem Beginn eines Wärme freisetzenden Umsatzes von durch die erste Piloteinspritzung eingespritztem Kraftstoff. Durch die erfindungsgemäße Wahl des Zeitpunkts für die zweite Piloteinspritzung wird der Brennverlauf für den Kraftstoff der zweiten Piloteinspritzung sowie der folgenden Haupteinspritzung verbessert.

Eine weitere Verbesserung des Brennverlaufs ist ermöglicht, wenn in weiterer Ausgestaltung der Erfindung die Haupteinspritzung zu einem Zeitpunkt nach dem Beginn eines Wärme freisetzenden Umsatzes von durch die zweite Piloteinspritzung eingespritztem Kraftstoff erfolgt. Damit ist eine sichere Zündung auch bei sehr niedrigen Temperaturen gewährleistet. Auf diese Weise können außerdem HC-Emissionen auch bei sehr niedrigen Außentemperaturen vergleichsweise niedrig gehalten werden und es ist eine gezielte Aufheizung der Abgasreinigungsanlage ermöglicht. Typischerweise erfolgt die Haupteinspritzung erst nach dem oberen Totpunkt des Kompressionstakts, insbesondere erst nach etwa 10 Grad Kurbelwinkel nach dem oberen Totpunkt. Daraus resultiert eine späte Verbrennungslage bzw. eine späte Lage des Verbrennungsschwerpunkts. Dies ermöglicht eine sichere Zündung und eine gezielte und rasche Aufheizung der Abgasreinigungsanlage und damit des bevorzugt vorgesehenen zeolithhaltigen SCR-Katalysators. Zudem ist eine verbrennungsbedingte NO-Bildung vermindert.

In weiterer Ausgestaltung der Erfindung erfolgt die Durchführung des Kaltstartmotorbetriebsverfahrens in einem vorgebbaren Schwachlastbereich der Brennkraftmaschine und das Kaltstartmotorbetriebsverfahren wird bei einer Brennkraftmaschinenlast oberhalb des Schwachlastbereichs deaktiviert. Nach Deaktivierung des Kaltstartmotorbetriebsverfahrens wird bevorzugt ein Brennverfahren mit dominierender Diffusionsverbrennung eingestellt.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine Brennkraftmaschine mit einer Abgasreinigungsanlage mit Abgaskatalysatoren und einem Partikelfilter in einer schematischen Darstellung,
- Fig. 2: ein Diagramm mit schematischer Darstellung der Temperaturabhängigkeit einer HC-Speicherkapazität eines typischen Zeolith-SCR-Katalysators und
- Fig. 3: ein Diagramm mit schematischer Darstellung einer Wärmefreisetzung in einem Zylinder des Dieselmotors und Ansteuerimpulse I_{Injek} des entsprechenden Kraftstoffinjektors in Abhängigkeit von Zeit.

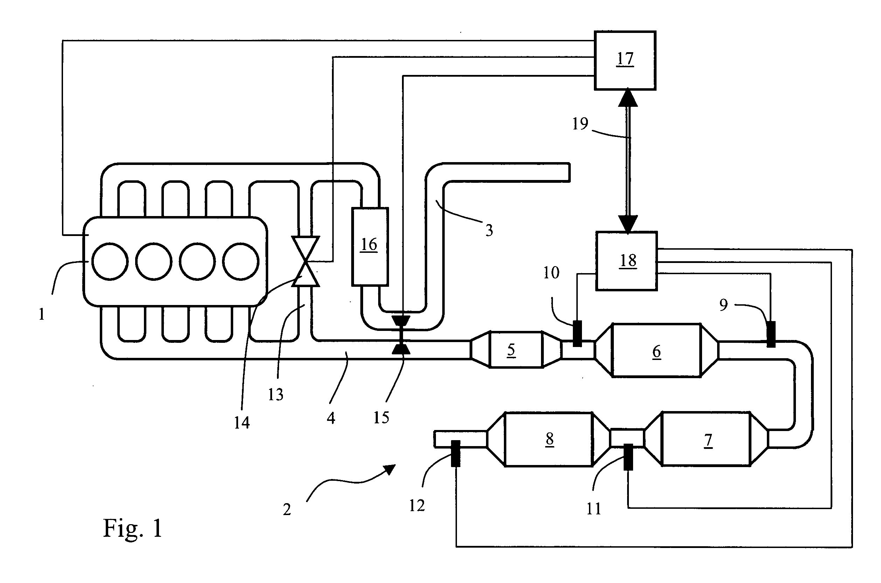

Fig. 1 zeigt schematisch eine vorteilhafte Ausführungsform eines Systems von Verbrennungsmotor 1 und Abgasreinigungsanlage 2 für ein nicht dargestelltes Kraftfahrzeug. Der Verbrennungsmotor 1 ist vorliegend als direkteinspritzende luftverdichtende Brennkraftmaschine nach dem Hubkolbenprinzip, nachfolgend vereinfacht als Dieselmotor bezeichnet, ausgeführt. Ein zugeordnetes nicht dargestelltes Kraftstoffeinspritzsystem ist vorzugsweise als so genanntes Common-Rail-System mit einstellbarem Raildruck bzw. Kraftstoffeinspritzdruck ausgeführt.

Den Zylindern des Dieselmotors 1 sind jeweils ein Brennraum mit ein oder zwei Einlass- und Auslassventilen, einer Glühkerze und einem Kraftstoffinjektor sowie ein oder mehrere Einlasskanäle für die Verbrennungsluft zugeordnet, was im Einzelnen nicht näher dargestellt ist. Die Kraftstoffinjektoren sind dabei zur Durchführung von Mehrfacheinspritzungen mit einstellbaren Einspritzmengen befähigt. Die Einlass- und Auslassventile sind bevorzugt mit einstellbaren Steuerzeiten und einstellbarem Öffnungshub betreibbar.

Der Dieselmotor 1 erhält seine Verbrennungsluft über eine Luftzufuhrleitung 3, in der ein nicht dargestellter Luftmassenmesser angeordnet ist. Mittels eines ebenfalls nicht dargestellten einstellbaren Drosselelements in der Luftzufuhrleitung kann der dem Dieselmotor 1 zugeführte Luftmassenstrom auf ein einstellbares Maß gedrosselt werden. Die Verbrennungsluft wird mittels eines Abgasturboladers 15 verdichtet und einem Ladeluftkühler 16 zur Kühlung zugeführt. Bevorzugt sind nicht näher dargestellte Mittel zur Anhebung des Temperaturniveaus der dem Dieselmotor 1 zugeführten Verbrennungsluft insbesondere in Verbindung mit einem Kaltstart bzw. Warmlauf vorgesehen. Vorzugsweise ist eine bedarfsweise Umgehbarkeit des Ladeluftkühlers 16 vorgesehen. Zur aktiven Anhebung der Verbrennungslufttemperatur kann eine Heizvorrichtung im Luftzufuhrtrakt vorgesehen sein. Besonders bevorzugt ist eine aktive Aufheizung mittels eines so genannten Gridheaters, der vorzugsweise in einer Abgasrückführleitung 13 vor deren Einmündung in die Luftzufuhrleitung 3 angeordnet ist. Der Abgasturbolader 15 ist vorzugsweise als so genannter VTG-Lader oder als Wastegate-Lader mit einstellbarem Ladedruck ausgeführt.

In den Brennräumen der Zylinder des Dieselmotors 1 erzeugtes Abgas wird über eine Abgasleitung 4 abgeleitet. Dabei kann der Verbrennungsluft über die Abgasrückführleitung 13 Abgas beigemischt und somit zum Dieselmotor 1 zurückgeführt werden. Der Anteil des rückgeführten Abgases (AGR-Rate) kann über ein AGR-Ventil 14 eingestellt werden. Vorzugsweise wird das zum Dieselmotor 1 rückführte Abgas mittels eines nicht dargestellten AGR-Kühlers gekühlt, wobei für den AGR-Kühler eine gegebenenfalls einstellbare Umgehung vorgesehen sein kann. Dadurch kann der Verbrennungsluft wahlweise gekühltes oder heißes bzw. erwärmtes Abgas zugemischt werden. Nicht rückgeführtes Abgas wird über den Abgasturbolader 15 der Abgasreinigungsanlage 2 zugeführt. Weiterhin ist bevorzugt ein nicht dargestelltes einstellbares Drosselelement in der Abgasleitung 4 stromab des Abgasturboladers 15 vorgesehen.

Mit der beschriebenen bevorzugten Ausführungsform können bedarfsgerecht unterschiedliche Werte für die wesentlichen Motorbetriebsparameter wie z.B. Luftmassenstrom, Einspritzzeit, -menge, -Druck und -Zeitpunkt mehrerer Kraftstoffeinspritzungen, AGR-Rate, Ladeluftdruck, Zylinderfüllung und damit unterschiedliche Brennverfahren dargestellt werden. Eine weitere Vergrößerung der Variabilität kann in Form eines einstellbaren Verdichtungsverhältnisses vorgesehen sein.

Eine bevorzugte Ausführungsform der dem Dieselmotor 1 zugeordneten Abgasreinigungsanlage 2 umfasst in Strömungsrichtung des Abgases gesehen in dieser Reihenfolge einen ersten Oxidationskatalysator 5, einen zweiten Oxidationskatalysator 6, einen Partikelfilter 7 und einen SCR-Katalysator 8. Als Partikelfilter 7 kommt vorzugsweise ein so genannter Wallflow-Filter auf SiC- Cordiererit- oder Aluminiumtitanatbasis zum Einsatz. Der Partikelfilter 7 kann jedoch auch als Sintermetallfilter oder als Filtereinheit mit einer offenen Filterstruktur ausgebildet sein. Bevorzugt sind die Katalysatoren 5, 6, 8 als Wabenkörpermonolithen ausgeführt, die von katalytisch beschichteten Kanälen durchzogen sind, durch welche das zugeführte Abgas strömen kann. Der SCR-Katalysator 8 ist vorzugsweise als beschichteter Trägerkatalysator mit einer Kupfer- oder Eisenhaltigen Zeolithbeschichtung ausgeführt. Infolge dieser Ausführungsform besitzt der SCR-Katalysator 8 die Eigenschaft, Abgaskomponenten, insbesondere HC, NOx und NH₃ einspeichern zu können. Die wesentliche Eigenschaft besteht jedoch darin, unter oxidierenden Bedingungen eine selektive Reduktion von NOx zu N₂ mittels eingespeichertem bzw. zugeführtem NH₃ als Reaktionspartner katalysieren zu können. Eine Zufuhr von NH₃ erfolgt bevorzugt über eine nicht dargestellte Dosiereinrichtung, über welche eine Harnstoff enthaltende Lösung ins Abgas stromauf des SCR-Katalysators 8 eingespritzt werden kann. Ins Abgas eingespritzter Harnstoff zersetzt sich dabei unter Freisetzung von NH₃.

Eingangsseitig des ersten Oxidationskatalysators 5 und/oder des zweiten Oxidationskatalysators 6 kann eine Brennstoffzugabeeinheit vorgesehen sein, über welche beispielsweise Kraftstoff als Brennstoff dem Abgas zugeführt werden kann. Infolge exothermer Oxidation des dem Abgas bedarfsgerecht zugeführten Brennstoffs ist eine gezielte Aufheizung des Abgases beispielsweise im Zusammenhang mit einer aktiven Regeneration des Partikelfilters 7 durch thermischen Rußabbrand ermöglicht.

In der Abgasnachbehandlungseinrichtung 2 sind verschiedene Temperatur- und Abgassensoren zur Erfassung von Abgas- und Bauteiletemperaturen sowie von Konzentrationen wichtiger Abgasbestandteile vorgesehen. Beispielhaft sind in Fig. 1 eingangsseitig des zweiten Oxidationskatalysators 6 sowie ausgangsseitig des Partikelfilters 7 je ein Temperatursensor 10, 11 in der Abgasreinigungsanlage 2 angeordnet. Ausgangsseitig des zweiten Oxidationskatalysators 6 sowie des SCR-Katalysators 8 sind gegenüber NOx und/oder NH₃ empfindliche Gassensoren 9, 12 vorgesehen. Zur Ermittlung der Beladung des Partikelfilters 7 mit Ruß und/oder Asche ist es zudem bevorzugt, ein- und ausgangsseitig des Partikelfilters 7 Drucksensoren bzw. einen Differenzdrucksensor vorzusehen, was in Fig. 1 nicht gesondert dargestellt ist. Mittels dieser und gegebenenfalls weiterer Sensoren kann der Betriebszustand der Abgasreinigungsanlage 2 umfassend ermittelt und der Betrieb des Dieselmotors 1 gegebenenfalls angepasst werden.

Zur Einstellung bzw. Erfassung des Motorbetriebs ist ein elektronisches Motorsteuergerät 17 vorgesehen. Das Motorsteuergerät 17 erhält einerseits Informationen über maßgebliche Motorbetriebsgrößen wie z.B. Drehzahl, Motorlast, Temperaturen, Drücke von den entsprechenden Sensoren bzw. Fühlern und kann andererseits Steuersignale als Einstellgrößen an Aktuatoren wie z.B. an das AGR-Ventil 14, den Abgasturbolader 15 oder das Drosselelement in der Luftzufuhrleitung 3 ausgeben. Es ist eine Regulierbarkeit von Betriebs- bzw. Zustandsgrößen der Gaszufuhrseite und der Kraftstoffzufuhrseite vorgesehen. Insbesondere ist das Motorsteuergerät 17 in der Lage, die Kraftstoffinjektoren zur Durchführung von Mehrfacheinspritzungen anzusteuern und gegebenenfalls den Kraftstoffeinspritzdruck bedarfsgerecht einzustellen. Ferner ist das Motorsteuergerät 17 zur Durchführung von Regel- und Steuervorgängen eingerichtet, mit welchen Motorbetriebsgrößen geregelt oder gesteuert eingestellt werden. Hierfür kann das Motorsteuergerät 17 auf abgespeicherte Kennfelder oder Berechnungs- bzw. Regel- oder Steuerroutinen zurückgreifen. Hierfür vorgesehene Subsysteme, wie Rechner, Speicher oder Ein-Ausgabeeinheiten und dergleichen sind nicht gesondert dargestellt.

In analoger Weise ist zur Erfassung und Einstellung von Betriebs- und Zustandsgrößen der Abgasnachbehandlungseinrichtung 2 ein zweites Steuergerät 18 vorgesehen. Das Motorsteuergerät 17 und das zweite Steuergerät 18 sind mittels einer bidirektionalen Datenleitung 19 miteinander verbunden. Auf diese Weise ist ein wechselseitiger Austausch von einem jeweiligen Steuergerät zur Verfügung stehenden Daten ermöglicht. Es versteht sich, dass die Steuergeräte 17, 18 auch in einer einzigen integralen Messwerterfassungs- und Steuereinheit zusammengefasst sein können.

In der dargestellten bevorzugten Ausführungsform ist weitestgehend ein optimaler Betrieb des Dieselmotors 1 und eine umfassende Reinigung der von ihm abgegebenen Abgase ermöglicht. Eine Abgasreinigung im gewünschten Umfang ist jedoch nur dann ermöglicht, wenn die Abgaskatalysatoren 5, 6, 8 ihre Betriebstemperatur aufweisen. Unterhalb einer so genannten Anspringtemperatur ist eine vermindert oder fehlende katalytische Aktivität gegeben, weshalb insbesondere in Verbindung mit einem Kaltstart bzw. einem Warmlauf besondere Maßnahmen erforderlich sind, um eine unerwünschten Schadstoffabgabe an die Umgebung zu vermeiden oder zumindest zu verringern. Nachfolgend wird speziell auf eine Verringerung der Emission von Kohlenwasserstoffen (HC) eingegangen. Insbesondere betreffen die nachfolgend erörterten Maßnahmen eine Verringerung der von HC gebildeten Weißrauchemission-Emission bei Umgebungstemperaturen unterhalb oder nahe des Gefrierpunkts bzw. bei Temperaturen der Abgaskatalysatoren 5, 6, 8 bzw. des Partikelfilters 7 unterhalb einer für eine Adsorption von HC bzw. Desorption von HC spezifischen Schwellentemperatur.

Obschon je nach Art der katalytischen Beschichtung der Abgaskatalysatoren 5, 6, 8 bzw. des Partikelfilters 7 jede dieser Abgasreinigungskomponenten insbesondere bei niedrigen Temperaturen eine HC-Adsorptionsfähigkeit aufweisen kann und daher infolge einer bei höheren Temperaturen auftretenden HC-Desorption für eine Weißrauch-Emission zumindest mit verantwortlich sein kann, wird nachfolgend davon ausgegangen, dass HC-Adsorptions- und Desorptionseffekte in erster Linie beim SCR-Katalysator 8 auftreten und eine gegebenenfalls auftretende Weißrauch-Emission daher dominant vom SCR-Katalysator 8 verursacht ist. Die nachfolgend erläuterten Maßnahmen zur Vermeidung einer unerwünschten HC-Emission speziell vom SCR-Katalysator 8 sind jedoch analog in Bezug auf eine oder mehrere der anderen Abgasreinigungskomponenten 5, 6, 7 anwendbar.

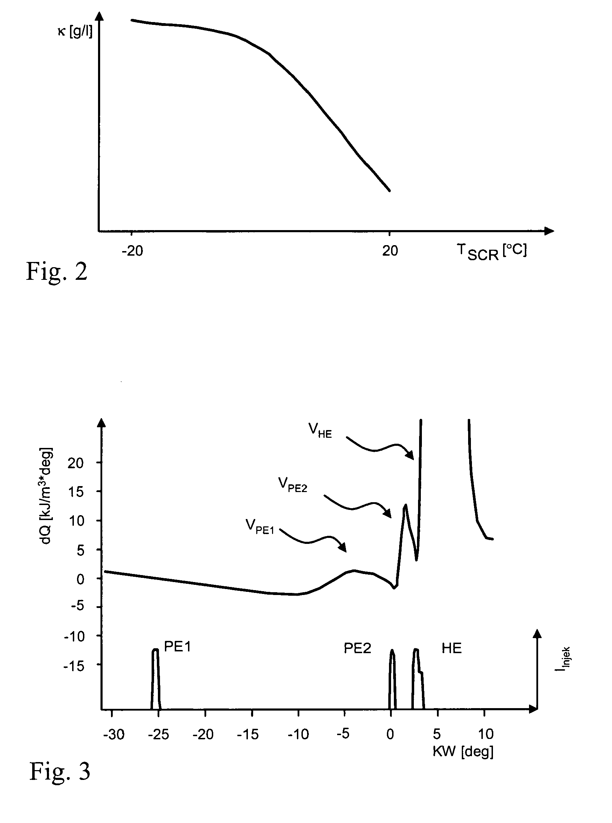

Typischerweise ist eine mit abnehmender Temperatur zunehmende Adsorptionsfähigkeit von HC gegeben. Die maximal aufnehmbare HC-Menge wird dabei als HC-Speicherkapazität bezeichnet. Im Diagramm von Fig. 2 ist schematisch die Temperaturabhängigkeit der HC-Speicherkapazität κ eines typischen SCR-Katalysators auf Zeolith-Basis dargestellt. Wie ersichtlich, nimmt mit abnehmender Temperatur T_{SCR} die HC-Speicherkapazität κ, d.h. die Menge an HC, welche im SCR-Katalysator eingespeichert werden kann zu. Dabei ist mit abnehmenden Temperaturen ein zunehmendes Sättigungsverhalten festzustellen. Obschon je nach Art und Umfang der katalytischen Zeolith-Beschichtung die Temperaturabhängigkeit der HC-Speicherkapazität κ unterschiedlich ausgeprägt sein kann, sind Werte im Bereich von 0,5 bis 30 Gramm HC je Liter Katalysatorvolumen, insbesondere von 1 bis 20 g/l für die HC-Speicherkapazität κ im Temperaturbereich von +100 °C bis minus 20 °C als typisch anzusehen. Insbesondere sind Maximalwerte von ca. 30 g/l bei Temperaturen von T_{SCR} < -15 °C charakteristisch für gebräuchliche Katalysatorausführungen. Oberhalb einer katalysatorspezifischen Schwellentemperatur von ca. +30 °C bis +150 °C, insbesondere von ca. 100 °C ist die HC-Speicherkapazität κ typischerweise vernachlässigbar. Ab einer geringfügig darüber liegenden zweiten Schwellentemperatur setzen mit zunehmender Temperatur stärker werdende Desorptionserscheinungen ein. Für üblicherweise bei Oxidationskatalysatoren oder Partikelfiltern verwendete Zeolithbeschichtungen werden die Schwellentemperaturen bevorzugt niedriger angesetzt. Hier ist meist oberhalb von etwa 50 °C die HC-Speicherkapazität κ vernachlässigbar. Mehr oder weniger starke Desorptionserscheinungen treten dabei typischerweise ab etwa 60 °C bis 80 °C auf.

Die von den Erfindern nachgewiesene HC-Speicherkapazität κ hat zur Folge, dass bei einem Motorbetrieb, bei welchem der SCR-Katalysator 8 die Schwellentemperatur unterschreitet, im Abgas vorhandene HC in mehr oder weniger starkem Umfang eingespeichert werden. Entsprechende Motorbetriebszustände umfassen beispielsweise einen oder mehrere aufeinanderfolgende Kaltstartvorgänge, an welche sich jeweils Schwachlastphasen oder Warmlaufphasen anschließen können. Wird im Anschluss an derartige Motorbetriebszustände vom Dieselmotor 1 eine höhere Last angefordert, so tritt infolge des stärker erhitzten Abgases eine Erwärmung des SCR-Katalysators 8 ein, was zu einer unerwünschten Desorption von zuvor eingespeicherten HC führen kann. Dabei werden desorbierende HC ab einer Grenzkonzentration als Weißrauch wahrgenommen. Die Erfinder haben festgestellt, dass das Ausmaß der HC-Desorption maßgeblich von der im SCR-Katalysator 8 eingespeicherten HC-Menge sowie von der Aufheizgeschwindigkeit des SCR-Katalysators 8 abhängig ist.

Bei den entsprechenden Versuchen wurde festgestellt, dass in einem charakteristischen Desorptions-Temperaturbereich der entsprechenden Abgasreinigungskomponente HC-Desorptionsspitzen auftreten, die mit zunehmender HC-Speichermenge eine zunehmende Höhe aufweisen. Obschon der Desorptions-Temperaturbereich von der Art der katalytischen Zeolith-Beschichtung abhängig ist, sind Werte im Bereich von +50 °C bis +150 °C, insbesondere von +50 bis + 150 °C für das Auftreten des HC-Desorptionsmaximums als typisch anzusehen. Es wurde weiter festgestellt, dass die HC-Desorptionsrate bzw. die Höhe und Breite der HC-Desorptionsspitze von der Aufheizgeschwindigkeit, d.h. von der Größe des Aufheizgradienten abhängig ist. Bei einer Aufheizung treten in einem charakteristischen Desorptions-Temperaturbereich HC-Desorptionsspitzen auf, die mit zunehmendem Aufheizgradienten eine zunehmende Höhe und eine abnehmende Breite aufweisen.

Aufgrund der in entsprechenden Grundlagenversuchen festgestellten Ergebnisse wurden Strategien zur Vermeidung einer unerwünscht starken HC-Freisetzung bei einem Kaltstart und/oder einem Warmlauf des Dieselmotors entwickelt, die erfindungsgemäß einerseits darauf abzielen, eine Einspeicherung von HC im SCR-Katalysator 8 mengenmäßig zu begrenzen. Dies wird dadurch erreicht, dass eine Abschätzung der Menge von im SCR-Katalysator 8 gespeicherten HC erfolgt und eine gezielte Aufheizung des SCR-Katalysators 8 mittels entsprechend erwärmten Abgas vorgenommen wird, wenn die Abschätzung ergibt, dass die HC-Speichermenge einen vorgebbaren HC-Speichermengengrenzwert überschreitet. Auf diese Weise werden eine Einspeicherung kritisch großer HC-Mengen vermieden und es wird eine Desorption von im SCR-Katalysator 8 gespeicherten HC zu einem Zeitpunkt erzwungen, bevor die HC-Speichermenge ein derart kritisches Niveau erreicht, dass eine später erfolgende Erwärmung unerwünscht hohe HC-Desorptionsspitzen nach sich ziehen würde. Andererseits werden nachfolgend näher erläuterte Aufheizmaßnahmen derart vorgenommen, dass ein vorgebbarer Desorptionsratenwert für eine sich infolge der Aufheizung des SCR-Katalysators 8 ergebende Rate von vom SCR-Katalysator 8 desorbierenden HC oder eine vorgebbare Maximalkonzentration von HC in dem an die Umgebung abgegebenen Abgas unterschritten wird.

Zur Abschätzung der HC-Speichermenge im SCR-Katalysator 8 ist es erfindungsgemäß vorgesehen, die Anzahl von aufeinander folgenden Kaltstart- und Warmlaufvorgängen zu erfassen, bei denen eine vorgebbare Schwellentemperatur für den SCR-Katalysator 8 ständig oder zumindest überwiegend unterschritten ist. Die dabei vom Dieselmotor 1 emittierte und in der Abgasreinigungsanlage 2 bzw. im SCR-Katalysator 8 eingespeicherte HC-Menge wird ebenfalls ermittelt. Hierfür wird bevorzugt auf abgespeicherte Emissionskennfelder des Dieselmotors 1 zurückgegriffen, in welchen Werte für die HC-Rohemission in Abhängigkeit von maßgeblichen Motorbetriebsparametern abgespeichert sind. In Verbindung mit ebenfalls abgespeicherten Adsorptions- und Desorptionskennlinien ist eine Aufsummierung von in jeweiligen Kaltstart- und Warmlaufvorgängen im SCR-Katalysator 8 eingespeicherten HC-Mengen ermöglicht. Ergibt die Abschätzung, dass die HC-Speichermenge einen HC-Speichermengengrenzwert überschreitet, der einen insbesondere in Abhängigkeit von der Temperatur des SCR-Katalysators 8 und/oder des Abgasdurchsatzes vorgebbaren Bruchteil einer HC-Speicherkapazität κ des SCR-Katalysators 8 überschreitet, so werden Aufheizmaßnahmen aktiviert, die bevorzugt so gesteuert sind, dass ein vorgebbarer Aufheizgradientenmaximalwert für einen Aufheizgradienten des SCR-Katalysators 8 insbesondere in oder nahe unterhalb des Desorptions-Temperaturbereichs unterschritten wird. Der Aufheizgradientenmaximalwert wird bevorzugt in Abhängigkeit von HC-Speichermenge und/oder Temperatur des SCR-Katalysators 8 so festgelegt, dass die HC-Maximalkonzentration in dem an die Umgebung abgegebenen Abgas einen vorgebbaren Wert unterschreitet. Bevorzugt entspricht dieser Wert für die HC-Maximalkonzentration einer Sichtbarkeitsgrenze von Weißrauch. Typische Werte für den HC-Speichermengengrenzwert betragen etwa 10 % bis 30 % der HC-Speicherkapazität κ. Typische Werte für den Aufheizgradientenmaximalwert betragen etwa 5 bis 20 °C je min.

Erfindungsgemäß werden zur gezielten Aufheizung des SCR-Katalysators 8 bei einem Kaltstart und/oder einem sich daran anschließenden Warmlauf bzw. Kaltlauf mehrere normalerweise eingestellte Motorbetriebsgrößen derart verändert, dass ein gegenüber dem normalen Betrieb stärker erhitztes Abgas resultiert. Bevorzugt werden in einem nachfolgend als Kaltstartmotorbetriebsverfahren bezeichneten Verfahren eine oder mehrere der folgenden Maßnahmen ergriffen:
- Schließen des in der Abgasleitung 4 angeordneten Drosselelements entsprechend einer Verringerung des freien Durchflussquerschnitts um 10 % bis 95 %, insbesondere lastabhängig, mit stärkerer Drosselung bei geringer Last. Besonders bevorzugt ist ein Schließen des Drosselelements derart, dass ein Staudruck von 1 bar bis 4 bar, insbesondere von 2 bar bis 3 bar resultiert.
- Schließen des in der Luftzufuhrleitung 3 angeordneten Drosselelements entsprechend einer Verringerung des freien Durchflussquerschnitts um 10 % bis 95 %, vorzugsweise 30 % bis 70 %.
- Reduzierung des vom Abgasturbolader gelieferten Ladedrucks, gegebenenfalls bis zum Erreichen der Laufgrenze oder einer vorgebbaren Rußgrenze, vorzugsweise entsprechend einer Schwärzungszahl von 1 oder mehr.
- Betätigung des Gridheaters in der AGR-Leitung.
- Verändern der Steuerzeit der Auslassventile eines oder mehrerer Zylinder des Dieselmotors 1 derart, dass das Auslassventil im Bereich 10 °KWnOT bis 75 °KWnOT, bevorzugt 40 °KWnOT bis 65 °KwnOT öffnet.
- Schließen des AGR-Ventils 14, bevorzugt wenigstens zeitweise vollständig, bei Bedarf vorübergehend oder allmählich öffnend bis zu einem für den Normabetrieb applizierten Öffnungsgrad.
- Durchführung einer ersten Piloteinspritzung, einer auf die erste Piloteinspritzung folgenden zweiten Piloteinspritzung und einer auf die zweite Piloteinspritzung folgenden Haupteinspritzung von Kraftstoff in die Zylinder des Dieselmotors derart, dass eine Schwerpunktslage der Kraftstoffverbrennung nach dem oberen Totpunkt des Kompressionstakts resultiert.

Insbesondere bei niedrigen Außentemperaturen von -10 °C oder weniger ist es besonders bevorzugt, wenn für einen Kaltstart und eine sich daran anschließende Warmlauf- bzw. Kaltlaufphase entsprechend dem zuletzt genannte Punkt eine spezielle Einstellung von Kraftstoffeinspritzparametern erfolgt, wie nachfolgend unter Bezug auf das in Fig. 3 dargestellte Diagramm näher erläutert wird.

Im Diagramm von Fig. 3 sind im oberen Teil eine Wärmefreisetzung dQ in einem Zylinder des Dieselmotors 1 und im unteren Teil Ansteuerimpulse I_{Injek} des entsprechenden Kraftstoffinjektors in Abhängigkeit von Zeit, umnormiert auf Grad Kurbelwinkel KW, schematisch dargestellt.

Das erfindungsgemäße Kaltstartmotorbetriebsverfahren mit entsprechend gewählten Einspritzparametern ist als teilhomogenes Brennverfahren mit wenigstens zwei Piloteinspritzungen PE1, PE2 und wenigstens einer Haupteinspritzung HE von Kraftstoff in die Brennräume des Dieselmotors ausgelegt. Dabei erfolgt bevorzugt die erste Piloteinspritzung PE1 derart zu einem frühen Zeitpunkt im Kompressionstakt, dass sich im weiteren Verlauf des Kompressionstakts ein überwiegend homogenes zündfähiges Luft-Kraftstoffgemisch und nach einer gewissen Zündverzögerung ein homogene Verbrennung des homogenen Gemisches mit einer Wärmefreisetzung, gekennzeichnet durch den mit V_{PE1} bezeichneten Pfeil ergibt.

Die zweite Piloteinspritzung PE2 erfolgt bevorzugt etwa am oberen Totpunkt des Kompressionstakts zu einem Zeitpunkt, bei welchem infolge der Verbrennung der zuvor eingespritzten Kraftstoffmenge der ersten Piloteinspritzung PE1 eine deutliche Temperaturanhebung im Brennraum eingetreten ist. Die Haupteinspritzung HE erfolgt abgesetzt zur zweiten Piloteinspritzung PE2 analog einem Zeitpunkt, bei welchem infolge der Verbrennung der zuvor eingespritzten zweiten Piloteinspritzung PE2 eine weitere deutliche Wärmefreisetzung, gekennzeichnet durch den mit V_{PE2} bezeichneten Pfeil im Brennraum eingetreten ist. Auf diese Weise ist eine Entflammung des eingespritzten Kraftstoffs auch bei sehr niedrigen Temperaturen von -20 °C und weniger sichergestellt.

Die Verbrennung der Haupteinspritzung HE erfolgt bevorzugt in konventioneller Diffusionsverbrennung. Dabei kann es vorgesehen sein, die Haupteinspritzung HE in mehrere Teileinspritzungen derart aufzuteilen, dass eine gestaffelte Verbrennung resultiert. Dabei ist es besonders bevorzugt, wenn die Einspritzmenge jeder Teileinspritzung der Haupteinspritzung HE größer als die Einspritzmenge der vorangegangenen Teileinspritzung eingestellt wird.

Die erste Piloteinspritzung PE1 erfolgt bevorzugt in einem Kurbelwinkelbereich von 20 °KWvOT bis 40 °KWvOT. Die Einspritzmenge der ersten Piloteinspritzung PE 1 wird dabei bevorzugt etwa im Bereich von 5 % bis 25 % der Einspritzmenge der Haupteinspritzung HE gewählt. Die zweite Piloteinspritzung PE2 erfolgt bevorzugt im Bereich des oberen Totpunkts in einem Kurbelwinkelbereich von 5 °KWvOT bis 5 °KWnOT, jedoch frühestens nach Zündung des mit der ersten Piloteinspritzung PE1 eingespritzten Kraftstoffs. Die Einspritzmenge der zweiten Piloteinspritzung PE2 wird dabei bevorzugt etwa im Bereich von 2 % bis 15 % der Einspritzmenge der Haupteinspritzung HE gewählt.

Abweichend von der im Diagramm von Fig. 3 gezeigten Darstellung wird der Spritzbeginn der Haupteinspritzung HE typischerweise in einem Kurbelwinkelbereich von 5 °KWnOT bis 20 °KWnOT gewählt, so dass sich eine vergleichsweise späte Verbrennungslage ergibt. Dabei kann mit dem Zeitpunkt des Ansteuerbeginns für den Kraftstoffinjektor die Abgasaufheizung gezielt eingestellt werden, so dass die angestrebte Aufheizrate des SCR-Katalysators 8 zuverlässig erzielt werden kann. Bei einer gegebenenfalls vorgenommenen Aufteilung der Haupteinspritzung HE in zwei Teileinspritzungen erfolgt die zweite Teileinspritzung angelagert an die erste Teileinspritzung in einem Kurbelwinkelbereich von 25 °KWnOT bis 60 °KWnOT. Dadurch ergibt sich mit ca. 20 °KWnOT eine vergleichsweise späte Lage des Verbrennungsschwerpunkts, wodurch eine gezielte Aufheizung der Abgasreinigungsanlage 2 und des SCR-Katalysators 8 ermöglicht ist. Mit steigender Motorlast ist bevorzugt eine weitere Spätverschiebung des Verbrennungsschwerpunkts vorgesehen.

Mit dem erfindungsgemäßen Kaltstartmotorbetriebsverfahren ist eine gezielte Aufheizung der Abgasreinigungskomponenten 5, 6, 7, 8 der Abgasreinigungsanlage 2 und speziell des SCR-Katalysators 8 auch bei sehr niedrigen Temperaturen und bei niedrigen Motorlasten ermöglicht. Eine Aufheizung zur Vermeidung unerwünscht hoher HC-Desorptionsspitzen ist damit auch unabhängig von der Einstellung bestimmter Fahrzustände ermöglicht. Erfindungsgemäß ist es vorgesehen, bei Erreichen einer vorgebbaren Schwellentemperatur für den SCR-Katalysator 8 bzw. der in Bezug auf eine rauchverursachende HC-Desorption dominanten Abgasreinigungskomponente das Kaltstartmotorbetriebsverfahren zu deaktivieren. Unter einer Deaktivierung ist dabei das Beenden wenigstens eines Teils der oben genannten Maßnahmen zu verstehen. Damit ist eine Begrenzung eines durch das Kaltstartmotorbetriebsverfahren verursachten Kraftstoffmehrverbrauchs ermöglicht. Eine Deaktivierung des Kaltstartmotorbetriebsverfahrens ist auch dann vorgesehen, wenn die Motorlast einen vorgegebenen oder vorgebbaren Grenzwert von etwa 30 % der Nennlast überschreitet. In diesem Fall erfolgt meist ohnehin eine natürlich Erwärmung der Abgasreinigungsanlage 2 und des SCR-Katalysators 8.

## Patentansprüche

1. Verfahren zum Betreiben einer Brennkraftmaschine mit einer Abgasreinigungsanlage mit wenigstens einer katalytischen und/oder filterwirksamen Abgasreinigungskomponente, bei welchem in Verbindung mit einem Kaltstart und/oder einem Warmlauf der Brennkraftmaschine (1) die Brennkraftmaschine (1) mit einem Kaltstartmotorbetriebsverfahren zur Aufheizung der Abgasreinigungskomponente mit vorgebbaren Werten für vorgebbare Brennkraftmaschinenbetriebsgrößen betrieben wird, wobei eine Abschätzung einer HC-Speichermenge von in einer oder mehreren der wenigstens einen Abgasreinigungskomponente gespeicherten Kohlenwasserstoffen erfolgt und das Kaltstartmotorbetriebsverfahren aktiviert wird, wenn die Abschätzung ergibt, dass die HC-Speichermenge einen vorgebbaren HC-Speichermengengrenzwert überschreitet, **dadurch gekennzeichnet, dass**.
bei aktiviertem Kaltstartmotorbetriebsverfahren Werte von Brennkraftmaschinenbetriebsgrößen derart vorgegeben werden, dass die wenigstens eine Abgasreinigungskomponente durch von der Brennkraftmaschine (1) abgegebene Abgase so aufgeheizt wird, dass ein Aufheizgradient der Aufheizung in einem vorgebbaren Desorptionstemperaturbereich, bei welchem eine Desorption von in der Abgasreinigungskomponente eingespeicherten Kohlenwasserstoffen erfolgt, einen vorgebbaren Aufheizgradientenmaximalwert unterschreitet.

2. Verfahren nach Anspruch 1,
**dadurch gekennzeichnet, dass**
das Kaltstartmotorbetriebsverfahren bei einem Kaltstart mit Außentemperaturen von minus 10 °C oder niedriger aktiviert wird.

3. Verfahren nach Anspruch 1 oder 2,
**dadurch gekennzeichnet, dass**
in einem Desorptionstemperaturbereich von 50 °C bis 150 °C der Aufheizgradient weniger als 20 °C je Minute beträgt.

4. Verfahren nach einem der Ansprüche 1 bis 3,
**dadurch gekennzeichnet, dass**
der Aufheizgradientenmaximalwert so gewählt ist, dass eine durch eine Weißrauch-Sichtbarkeitsgrenze bestimmte Maximalkonzentration von mit dem Abgas an die Umgebung abgegebenen Kohlenwasserstoffen unterschritten wird.

5. Verfahren nach einem der Ansprüche 1 bis 4,
**dadurch gekennzeichnet, dass**
die Abschätzung der HC-Speichermenge auf einer Betriebsdauer der Brennkraftmaschine (1) mit einer ständig eine vorgebbare insbesondere erste Schwellentemperatur unterschreitenden Temperatur für wenigstens eine in Bezug auf eine rauchverursachende HC-Desorption dominante Abgasreinigungskomponente beruht.

6. Verfahren nach einem der Ansprüche 1 bis 5,
**dadurch gekennzeichnet, dass**
als HC-Speichermengengrenzwert ein Wert von 30 % oder weniger einer HC-Speicherkapazität (κ) der wenigstens einen Abgasreinigungskomponente oder einer in Bezug auf eine rauchverursachende HC-Desorption dominanten Abgasreinigungskomponente vorgegeben wird.

7. Verfahren nach einem der Ansprüche 1 bis 6,
**dadurch gekennzeichnet, dass**
nach Erreichen einer vorgebbaren insbesondere zweiten Schwellentemperatur für wenigstens eine der Abgasreinigungskomponenten oder einer in Bezug auf eine rauchverursachende HC-Desorption dominanten Abgasreinigungskomponente das Kaltstartmotorbetriebsverfahren deaktiviert wird.

8. Verfahren nach einem der Ansprüche 1 bis 7,
**dadurch gekennzeichnet, dass**
bei aktiviertem Kaltstartmotorbetriebsverfahren eine Mehrfacheinspritzung von Kraftstoff in einen oder mehrere Zylinderbrennräume der Brennkraftmaschine (1) vorgenommen wird, welche innerhalb eines Arbeitsspiels des jeweiligen Zylinders eine erste Piloteinspritzung (PE1), eine auf die erste Piloteinspritzung folgende zweite Piloteinspritzung (PE2) und eine auf die zweite Piloteinspritzung (PE2) folgende Haupteinspritzung (HE) umfasst, wobei
- die erste Piloteinspritzung (PE1) in einem Kurbelwellenwinkelbereich von größer als 20 Grad vor einem oberen Totpunkt im Kompressionstakt des jeweiligen Zylinders erfolgt
- die zweite Piloteinspritzung (PE2) zu einem Zeitpunkt nach dem Beginn eines Wärme freisetzenden Umsatzes von durch die erste Piloteinspritzung (PE1) eingespritztem Kraftstoff erfolgt, und
- die Haupteinspritzung (HE) zu einem Zeitpunkt nach dem Beginn eines Wärme freisetzenden Umsatzes von durch die zweite Piloteinspritzung (PE2) eingespritztem Kraftstoff erfolgt.

9. Verfahren nach Anspruch 8,
**dadurch gekennzeichnet, dass**
die Einspritzmenge der zweiten Piloteinspritzung (PE2) kleiner gewählt wird als die Einspritzmenge der ersten Piloteinspritzung (PE1).

10. Verfahren nach Anspruch 8 oder 9,
**dadurch gekennzeichnet, dass**
die zweite Piloteinspritzung (PE2) in einem Kurbelwinkelbereich von 5 Grad vor bis 5 Grad nach dem oberen Totpunkt des Kompressionstakts erfolgt.

11. Verfahren nach einem der Ansprüche 8 bis 10,
**dadurch gekennzeichnet, dass**
die Haupteinspritzung (HE) in einem Kurbelwinkelbereich von 5 Grad bis 20 Grad nach dem oberen Totpunkt des Kompressionstakts erfolgt.

12. Verfahren nach einem der Ansprüche 1 bis 11,
**dadurch gekennzeichnet, dass**
die Durchführung des Kaltstartmotorbetriebsverfahrens in einem vorgebbaren Schwachlastbereich der Brennkraftmaschine (1) erfolgt und das Kaltstartmotorbetriebsverfahren bei einer Brennkraftmaschinenlast oberhalb des Schwachlastbereichs deaktiviert ist.

13. Verfahren nach einem der Ansprüche 1 bis 12,
**dadurch gekennzeichnet, dass**
die Abschätzung der HC-Speichermenge bei einem SCR-Katalysator (8) als katalytischer Abgasreinigungskomponente der Abgasreinigungsanlage vorgenommen wird und das Kaltstartmotorbetriebsverfahren aktiviert wird, wenn die Abschätzung ergibt, dass die HC-Speichermenge des SCR-Katalysators (8) den vorgebbaren HC-Speichermengengrenzwert überschreitet.

## Claims

1. Method for the operation of an internal combustion engine comprising an exhaust emission control system with at least one catalytic or filter-active emission control component, wherein the internal combustion engine (1) is, in association with a cold start and/or a warm-up of the internal combustion engine (1), operated using a cold start engine operating process for heating the emission control component with presettable values for presettable internal combustion engine operating variables, wherein an HC storage quantity stored in one or more of the at least one emission control component(s) is estimated and the cold start engine operating process is activated if the estimate indicates that the HC storage quantity exceeds a presettable HC storage quantity limit value,
**characterised in that**
in the activated state of the cold start engine operating process, values of internal combustion engine operating variables are preset in such a way that the at least one emission control component is heated by exhaust gases emitted by the internal combustion engine (1) in such a way that a heating gradient of the heating process falls below a presettable heating gradient maximum value in a presettable desorption temperature range in which hydrocarbons stored in the emission control component are desorbed.

2. Method according to claim 1,
**characterised in that**
the cold start engine operating process is activated at a cold start with outside temperatures of minus 10 degrees C or less.

3. Method according to claim 1 or 2,
**characterised in that**
the heating gradient is less than 20 degrees C per minute in a desorption temperature range of 50 to 150 degrees C.

4. Method according to any of claims 1 to 3,
**characterised in that**
the heating gradient maximum value is chosen such that that a maximum concentration of hydrocarbons emitted into the environment with the exhaust gas as determined by a white smoke visibility limit is undershot.

5. Method according to any of claims 1 to 4,
**characterised in that**
the estimate of the HC storage quantity is based on an operating time of the internal combustion engine (1) with a temperature which consistently undershoots a presettable, in particular first, threshold temperature for at least one emission control component which is dominant in terms of a smoke-generating HC desorption.

6. Method according to any of claims 1 to 5,
**characterised in that**
a value of 30% or less of an HC storage capacity (κ) of the at least one emission control component or of an emission control component which is dominant in terms of a smoke-generating HC desorption is preset as HC storage quantity limit value.

7. Method according to any of claims 1 to 6,
**characterised in that**
on reaching a presettable, in particular second, threshold temperature for at least one emission control component or for an emission control component which is dominant in terms of a smoke-generating HC desorption, the cold start engine operating process is deactivated.

8. Method according to any of claims 1 to 7,
**characterised in that**
if the cold start engine operating process is activated, a multiple injection of fuel into one or more cylinder combustion chambers of the internal combustion engine (1) is performed, the multiple injection comprising within one working cycle of the respective cylinder a first pilot injection (PE1), a second pilot injection (PE2) following the first pilot injection and a main injection (HE) following the second pilot injection (PE2), wherein
- the first pilot injection (PE1) occurs in a crank angle range of more than 20 degrees before a top dead centre in the compression stroke of the respective cylinder,
- the second pilot injection (PE2) occurs at a time following the start of a heat-releasing conversion of fuel injected in the first pilot injection (PE1), and
- the main injection (HE) occurs at a time following the start of a heat-releasing conversion of fuel injected in the second pilot injection (PE2).

9. Method according to claim 8,
**characterised in that**
the amount of fuel injected in the second pilot injection (PE2) is chosen to be smaller than the amount of fuel injected in the first pilot injection (PE1).

10. Method according to claim 8 or 9,
**characterised in that**
the second pilot injection (PE2) occurs in a crank angle range of 5 degrees before to 5 degrees after top dead centre of the compression stroke.

11. Method according to any of claims 8 to 10,
**characterised in that**
the main injection (HE) occurs in a crank angle range of 5 degrees before to 20 degrees after top dead centre of the compression stroke.

12. Method according to any of claims 1 to 11,
**characterised in that**
the cold start engine operating process is performed in a low-load range of the internal combustion engine (1) and deactivated at an internal combustion engine load above the low-load range.

13. Method according to any of claims 1 to 12,
**characterised in that**
the HC storage quantity is estimated at an SCR catalytic converter (8) as a catalytic emission control component of the exhaust emission control system, and the cold start engine operating process is activated if the estimate indicates that the HC storage quantity of the SCR catalytic converter (8) exceeds the presettable HC storage quantity limit value.

## Revendications

1. Procédé de fonctionnement d'un moteur à combustion interne doté d'un système d'épuration des gaz à échappement comprenant au moins un composant d'épuration des gaz d'échappement à effet filtre et/ou catalytique, en association avec un démarrage à froid et/ou un préchauffage du moteur à combustion interne (1), le moteur à combustion interne (1) fonctionnant selon un procédé de fonctionnement de moteur à démarrage à froid destiné à préchauffer le composant d'épuration des gaz d'échappement à des valeurs prédéfinies pour des grandeurs de fonctionnement de moteur à combustion interne prédéfinies, une estimation d'une quantité d'hydrocarbures stockés s'effectue dans un ou plusieurs de l'au moins un composant d'épuration des gaz d'échappement et le procédé de fonctionnement du moteur à démarrage à froid étant activé, lorsque l'évaluation indique que la quantité d'hydrocarbures stockés dépasse une valeur limite de quantité d'hydrocarbures stockés, **caractérisé en ce que** selon le procédé de fonctionnement de moteur à démarrage à froid activé, des valeurs de grandeurs de fonctionnement du moteur à combustion interne sont définies de sorte que l'au moins un composant d'épuration des gaz à échappement est préchauffé par les gaz d'échappement émis par le moteur à combustion interne (1) de sorte qu'un gradient de préchauffage dans une zone de température de désorption est inférieur à une valeur maximale de gradient de préchauffage prédéfinie, dans ladite zone se produisant une désorption des hydrocarbures stockés dans le composant d'épuration des gaz d'échappement.

2. Procédé selon la revendication 1, **caractérisé en ce que** le procédé de fonctionnement de moteur à démarrage à froid est activé lors d'un démarrage à froid à une température extérieure inférieure ou égale à moins 10°C.

3. Procédé selon la revendication 1 ou la revendication 2, **caractérisé en ce que** dans une zone de température de désorption comprise entre 50 °C et 150 °C, le gradient de préchauffage est inférieur à 20 °C par minute..

4. Procédé selon l'une quelconque des revendications 1 à 3, **caractérisé en ce que** la valeur maximale de gradient de préchauffage est sélectionnée de telle sorte qu'une concentration maximale déterminée par une limite de visibilité de fumée blanche des hydrocarbures émis avec les gaz d'échappement dans l'environnement ne soit pas atteinte.

5. Procédé selon l'une quelconque des revendications 1 à 4, **caractérisé en ce que** l'estimation de la quantité d'hydrocarbures stockés se base sur une durée de fonctionnement du moteur à combustion interne (1) au moyen d'une température constante inférieure à une première température seuil particulièrement définie pour au moins un composant d'épuration des gaz d'échappement dominant par rapport à une désorption d'hydrocarbures provoquant de la fumée.

6. Procédé selon l'une quelconque des revendications 1 à 5, **caractérisé en ce que** en tant que valeur limite de quantité d'hydrocarbures stockés une valeur inférieure ou égale à 30 % d'une capacité (k) de stockage d'hydrocarbures de l'au moins un composant d'épuration des gaz d'échappement ou d'un composant d'épuration des gaz d'échappement dominant par rapport à une désorption d'hydrocarbures provoquant de la fumée est définie.

7. Procédé selon l'une quelconque des revendications 1 à 6, **caractérisé en ce qu'**en particulier, une fois une seconde température seuil prédéfinie atteinte pour au moins l'un des composants d'épuration des gaz d'échappement ou d'un composant d'épuration des gaz d'échappement dominant par rapport à une désorption d'hydrocarbures provoquant de la fumée, le procédé de fonctionnement du moteur à combustion interne est désactivé.

8. Procédé selon l'une quelconque des revendications 1 à 7, **caractérisé en ce que** selon le procédé de fonctionnement de moteur à démarrage à froid activé, se produisent des injections multiples de carburant dans un ou plusieurs chambres de combustion de cylindre du moteur à combustion interne (1), laquelle comprend dans un cycle de fonctionnement de chaque cylindre une première injection pilote (PE1), une seconde injection pilote (PE2) suivant la première injection pilote et une injection principale (HE) suivant la seconde injection pilote (PE2),
- la première injection pilote (PE1) se produit dans une zone angulaire de vilebrequin supérieure à 20 degrés avant un point mort haut dans une course de compression de chaque cylindre,
- la seconde injection pilote (PE2) se produit à un moment après le début d'une conversion libérant la chaleur du carburant injecté par la première injection pilote (PE1), et
- l'injection principale (HE) se produit à un moment après le début d'une conversion libérant la chaleur du carburant injecté par la seconde injection pilote (PE1).

9. Procédé selon la revendication 8, **caractérisé en ce que** la quantité d'injection de la seconde injection pilote (PE2) est inférieure à la quantité d'injection de la première injection pilote (PE1).

10. Procédé selon la revendication 8 ou 9, **caractérisé en ce que** la seconde injection pilote (PE2) se produit dans une zone angulaire de vilebrequin de 5 degrés exclus après le point mort haut dans une course de compression.

11. Procédé selon l'une quelconque des revendications 8 à 10, **caractérisé en ce que** l'injection principale (HE) se produit dans une zone angulaire de vilebrequin comprise entre 5 degrés et 20 degrés après le point mort haut dans une course de compression.

12. Procédé selon l'une quelconque des revendications 1 à 17, **caractérisé en ce que** l'exécution du procédé de fonctionnement du moteur à démarrage à froid s'effectue dans une zone de charge réduite du moteur à combustion interne (1) et le procédé de fonctionnement de moteur à démarrage à froid est désactivé lorsque la charge du moteur à combustion interne est supérieure à la zone de charge faible.

13. Procédé selon l'une quelconque des revendications 1 à 12, **caractérisé en ce que** l'estimation de la quantité d'hydrocarbures stockés pour un catalyseur de réduction catalytique sélective (8) en tant que composant d'épuration des gaz d'échappement catalytique du système d'épuration des gaz d'échappement est réalisée et le procédé de fonctionnement de moteur à démarrage à froid est activé lorsque l'estimation indique que la quantité d'hydrocarbures stockés du catalyseur de réduction catalytique sélective (8) dépasse la valeur limite de quantité prédéfinie d'hydrocarbures stockés.
